# EUROPEAN PATENT APPLICATION

(11) **EP 4 679 799 A1**
(43) Date of publication of application: **14.01.2026**
(21) Application number: 23926367.6
(22) Date of filing: 30.06.2023
(51) Int. Cl.: H04L 47/12, H04L 45/851, H04L 47/11, H04W 28/088

(54) **COMMUNICATION CONTROL DEVICE, COMMUNICATION CONTROL METHOD, COMMUNICATION CONTROL PROGRAM, AND COMMUNICATION CONTROL SYSTEM**

(30) Priority: 03.03.2023 JP 2023033234
(71) Applicant: NTT Docomo Business, Inc., Tokyo 100-8019 (JP)
(72) Inventor: YASUI, Takanori, Tokyo 100-8019 (JP); ISHII, Masami, Tokyo 100-8019 (JP); HORIGOMI, Ryohei, Tokyo 100-8019 (JP); OZAWA, Yojiro, Tokyo 100-8019 (JP); SHIMURA, Yuko, Tokyo 100-8019 (JP)
(74) Representative: Hoffmann Eitle
(86) International application number: PCT/JP2023/024524
(87) International publication number: WO 2024/185158

(57) **Abstract**

CPE (10) includes a wired communication unit (11), a wireless communication unit (12), a communication control unit (141), an acquisition unit (142), and a selection unit (143). The wired communication unit (11) relays communication between a housed user device and a fixed communication network. The wireless communication unit (12) relays communication between the user device and a mobile communication network. The acquisition unit (142) acquires the degree of congestion of at least one of the fixed communication network and the mobile communication network. The selection unit (143) selects one of the fixed communication network and the mobile communication network based on the degree of congestion. The communication control unit (141) causes the user device to execute communication by using the communication network selected by the selection unit (143).

## Description

### [Technical Field]

The present invention relates to a communication control device, a communication control method, a communication control program, and a communication control system.

### [Background Art]

There have been known techniques of performing band control on a user to be controlled in a case where occurrence of congestion in a communication network is detected (e.g., see Patent Literature 1).

### [Citation List]

### [Patent Citation]

Patent Literature 1: JP 2014-236482 A

### [Summary of Invention]

### [Technical Problem]

Unfortunately, conventional techniques have such a problem that avoiding congestion while maintaining quality of communication service is difficult. For example, in the technique described in Patent Literature 1, quality of communication service provided to a user subjected to band control may be deteriorated.

### [Solution to Problem]

In order to solve the above-described problems and achieve the object, a communication control device includes: a first communication unit that relays communication between a user device that is housed and a fixed communication network; a second communication unit that relays communication between the user device and a mobile communication network; an acquisition unit that acquires a degree of congestion of at least one of the fixed communication network and the mobile communication network; a selection unit that selects one of the fixed communication network and the mobile communication network based on the degree of congestion; and a communication control unit that causes the user device to execute communication by using a communication network selected by the selection unit.

### [Advantageous Effects of Invention]

According to the present invention, congestion can be avoided while quality of communication service is maintained.

### [Brief Description of Drawings]

FIG. 1 illustrates a configuration of an entire network.
FIG. 2 illustrates a configuration example of customer premises equipment (CPE).
FIG. 3 is a flowchart illustrating a flow of processing of the CPE.
FIG. 4 is a flowchart illustrating a flow of processing of the CPE.
FIG. 5 illustrates a configuration example of a computer that executes a communication control program.
FIG. 6 illustrates a configuration of a network of an SD-WAN.

### [Embodiments for Carrying Out the Invention]

An embodiment of a communication control device, a communication control method, a communication control program, and a communication control system according to the present application will be described in detail below with reference to the drawings. Note that the present invention is not limited to the embodiment described below.

### [First Embodiment]

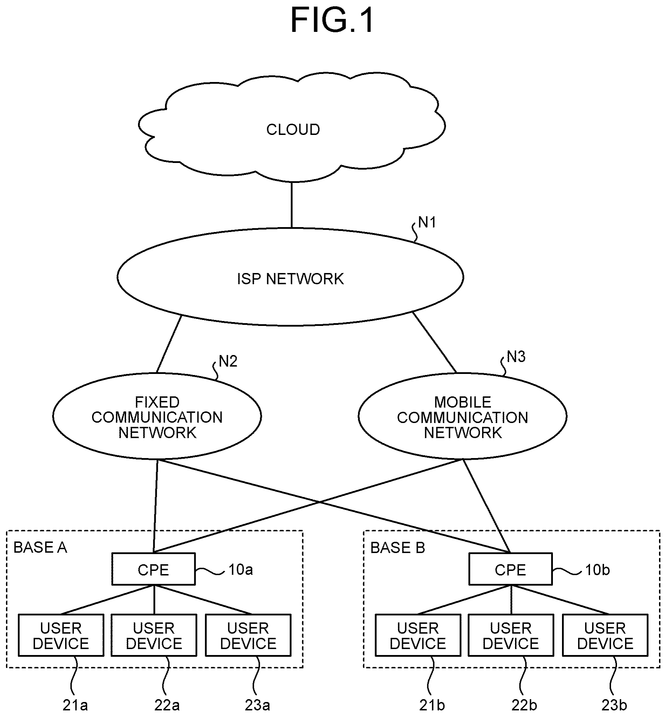

First, a configuration of an entire network including a communication control device will be described with reference to FIG. 1. FIG. 1 illustrates the configuration of the entire network.

As illustrated in FIG. 1, the network includes an Internet service provider (ISP) network N1, a fixed communication network N2, and a mobile communication network N3. The fixed communication network N2 and the mobile communication network N3 are connected to the ISP network N1.

The ISP network N1 is provided by an ISP. For example, the ISP provides connection service by using the ISP network N1. According to the connection service, a user device of a user can access an external network such as a cloud.

The fixed communication network N2 is provided by a line provider. The fixed communication network N2 is a wired communication network using an optical fiber cable and the like. The line provider can provide an optical line using the fixed communication network N2.

The mobile communication network N3 is provided by a line provider. The mobile communication network N3 is a wireless communication network using radio waves. The line provider can provide a wireless communication line such as 5G, 4G, and long term evolution (LTE) by using the mobile communication network N3.

Furthermore, customer premises equipment (CPE) is arranged at each base of a user. One or more user devices are connected to the CPE. Note that the CPE is an example of the communication control device. In each base, the CPE constitutes a user network.

In an example of FIG. 1, CPE 10a is arranged in a base A. A user device 21a, a user device 22a, and a user device 23a are connected to the CPE 10a. Furthermore, CPE 10b is arranged in a base B. A user device 21b, a user device 22b, and a user device 23b are connected to the CPE 10b.

In the following description, the CPE 10a and the CPE 10b may be referred to as pieces of CPE 10 without distinction. The CPE 10 is connected to both the fixed communication network N2 and the mobile communication network N3. Note that the number of pieces of CPE included in the network and the number of user devices connected to CPE are not limited to those illustrated in the figure.

Examples of a user device connected to the CPE 10 include a personal computer, a tablet user device, and a smartphone. The user device connected to the CPE 10 may be an IoT device such as a multifunction machine, a wearable user device, and a sensor. The CPE 10 and the user device are connected by wire or wirelessly.

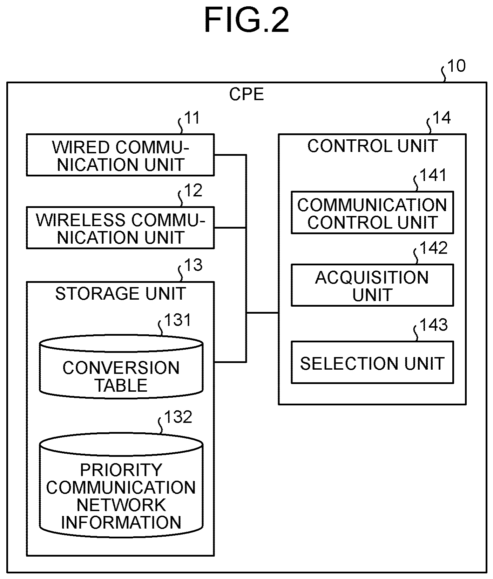

FIG. 2 illustrates a configuration example of the CPE. As illustrated in FIG. 2, the CPE 10 includes a wired communication unit 11, a wireless communication unit 12, a storage unit 13, and a control unit 14. The CPE 10 houses a user device. In the example of FIG. 1, the CPE 10a houses the user device 21a, the user device 22a, and the user device 23a. In the following description, the "user device" means a user device housed in the CPE 10.

The wired communication unit 11 is a module for performing wired communication. The wired communication unit 11 has a plurality of Ethernet (registered trademark) ports. Each of the Ethernet ports is connected to a user device or a user device device (e.g., optical network unit (ONU)) on the side of the fixed communication network N2. Note that the wired communication unit 11 may include a function as an ONU.

The wireless communication unit 12 is a module for performing wireless communication. The wireless communication unit 12 includes an antenna for transmitting and receiving radio waves. The wireless communication unit 12 performs wireless communication with a base station of the mobile communication network N3. Furthermore, the wireless communication unit 12 performs wireless communication with a user device wirelessly connected to the CPE 10.

The CPE 10 functions as a router. This enables the CPE 10 to relay communication between the housed user device and an external network. The wired communication unit 11 relays communication between the housed user device and the fixed communication network N2. Furthermore, the wireless communication unit 12 relays communication between the user device and the mobile communication network N3.

Note that which of the fixed communication network N2 and the mobile communication network N3 the user device communicates with is irrelevant to whether the user device is connected to the CPE 10 by wire or wirelessly.

The user device connected by wire to the CPE 10 by the wired communication unit 11 may communicate with the fixed communication network N2 via the wired communication unit 11, or may communicate with the mobile communication network N3 via the wireless communication unit 12. Furthermore, the user device connected wirelessly to the CPE 10 by the wireless communication unit 12 may communicate with the fixed communication network N2 via the wired communication unit 11, or may communicate with the mobile communication network N3 via the wireless communication unit 12.

The storage unit 13 is a storage device such as a hard disk drive (HDD), a solid state drive (SSD), and an optical disk. Note that the storage unit 13 may be a data rewritable semiconductor memory such as a random access memory (RAM), a flash memory, and a non volatile static random access memory (NVSRAM).

The storage unit 13 stores an operating system (OS) and various programs executed by the CPE 10. The storage unit 13 stores a conversion table 131 and priority communication network information 132.

The conversion table 131 is used for performing address conversion between a user device connected to the CPE 10 and a device outside the base. The conversion table 131 is a network address translation (NAT) table or a network address port translation (NAPT) table.

The priority communication network information 132 indicates which of the fixed communication network N2 and the mobile communication network N3 is preferentially used. Furthermore, the priority communication network information 132 may include the degree of congestion in each of the fixed communication network N2 and the mobile communication network N3.

The control unit 14 controls the entire CPE 10. The control unit 14 includes, for example, an electronic circuit and an integrated circuit. The electronic circuit includes a central processing unit (CPU), a micro processing unit (MPU), and a graphics processing unit (GPU). The integrated circuit includes an application specific integrated circuit (ASIC) and a field programmable gate array (FPGA).

Furthermore, the control unit 14 includes an internal memory for storing a program defining various processing procedures and control data, and executes each piece of processing by using the internal memory. Furthermore, the control unit 14 functions as various processing units by various programs operating.

For example, the control unit 14 includes a communication control unit 141, an acquisition unit 142, and a selection unit 143.

The communication control unit 141 controls the wired communication unit 11 and the wireless communication unit 12 to cause the user device to execute communication. For example, the communication control unit 141 transmits a packet transmitted from the user device to the fixed communication network N2 or the mobile communication network N3.

The acquisition unit 142 acquires the degree of congestion of at least one of the fixed communication network N2 and the mobile communication network N3. The acquisition unit 142 writes the acquired degree of congestion in the priority communication network information 132.

The selection unit 143 selects one of the fixed communication network N2 and the mobile communication network N3 based on the degree of congestion. The communication network selected by the selection unit 143 is a priority communication network. Note that the communication control unit 141 causes the user device to execute communication by using the priority communication network.

For example, when the transmission of a packet from the user device to the fixed communication network N2 fails, the selection unit 143 selects the mobile communication network N3.

Furthermore, for example, the selection unit 143 selects a communication network having a smaller degree of congestion from the fixed communication network N2 and the mobile communication network N3.

The selection unit 143 writes information indicating which of the fixed communication network N2 and the mobile communication network N3 has been selected in the priority communication network information 132. The communication control unit 141 can check which of the fixed communication network N2 and the mobile communication network N3 the priority communication network is with reference to the priority communication network information 132.

A method of communication control performed by the CPE 10 will be described below with reference to a flowchart. In an example, a method of attempting transmission of a packet and a method of preliminarily obtaining the degree of congestion will be described. The CPE 10 may implement one or both of the following methods.

### [Method of Attempting Transmission of Packet]

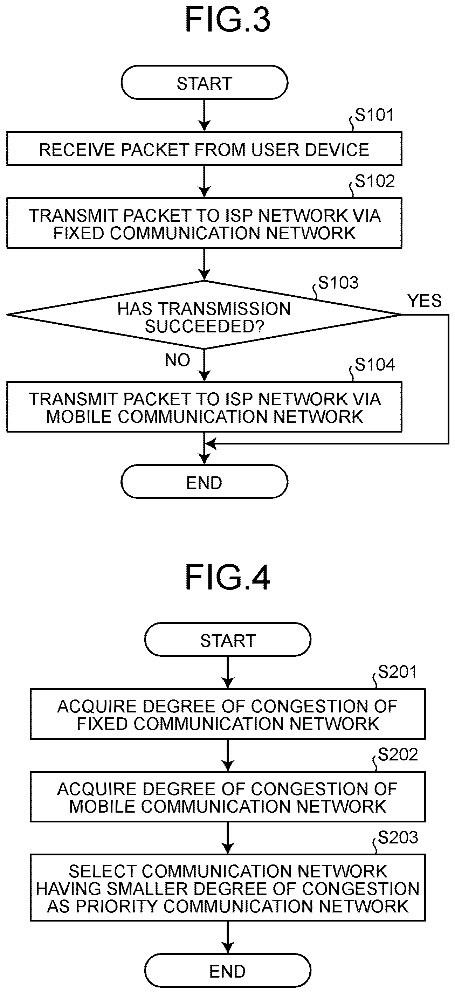

A method of attempting transmission of a packet will be described with reference to FIG. 3. FIG. 3 is a flowchart illustrating a flow of processing of the CPE.

As illustrated in FIG. 3, first, the communication control unit 141 receives a packet from a user device (Step S101). Note that, in the case, the fixed communication network N2 is indicated as a priority communication network in the priority communication network information 132.

The communication control unit 141 transmits the packet to the ISP network N1 via the fixed communication network N2 (Step S102).

Here, the acquisition unit 142 determines whether or not the transmission of the packet has succeeded (Step S103). The acquisition unit 142 can acquire the determination result as the degree of congestion.

When the transmission of the packet transmitted via the fixed communication network N2 fails, the acquisition unit 142 determines that the fixed communication network N2 has a large degree of (degree of threshold or more of) congestion. In contrast, when the transmission of the packet transmitted via the fixed communication network N2 succeeds, the acquisition unit 142 determines that the fixed communication network N2 has a small degree of (degree of less than threshold of) congestion.

For example, when an error indicating that transmission to the ISP network N1 has not performed is returned to the packet transmitted via the fixed communication network N2, the acquisition unit 142 determines that the transmission of the packet has failed. Furthermore, when there is no response to the packet transmitted via the fixed communication network N2 for a certain period of time (when timeout occurs), the acquisition unit 142 may determine that the transmission of the packet has failed.

When the acquisition unit 142 determines that the transmission of the packet has succeeded (Step S103, Yes), the CPE 10 ends the processing.

When the acquisition unit 142 determines that the transmission of the packet has failed (Step S103, No), the communication control unit 141 transmits the packet to the ISP network N1 via the mobile communication network N3 (Step S104).

Furthermore, in Step S104, the selection unit 143 preliminarily selects the mobile communication network N3, and writes that the priority communication network is the mobile communication network N3 in the priority communication network information 132.

[Method of Preliminarily Acquiring Degree of Congestion]

A method of preliminarily acquiring the degree of congestion will be described with reference to FIG. 4. FIG. 4 is a flowchart illustrating the flow of processing of the CPE.

As illustrated in FIG. 4, the acquisition unit 142 acquires the degree of congestion of the fixed communication network N2 (Step S201). Furthermore, the acquisition unit 142 acquires the degree of congestion of the mobile communication network N3 (Step S202).

For example, the acquisition unit 142 acquires the degree of congestion of each communication network from a monitoring device that monitors network flows of the fixed communication network N2 and the mobile communication network N3.

Furthermore, the acquisition unit 142 transmits Ping to a specific destination via each of the fixed communication network N2 and the mobile communication network N3, and acquires the degree of congestion based on a Ping value. For example, the acquisition unit 142 determines that the degree of congestion increases as the Ping value increases.

The selection unit 143 selects a communication network having a smaller degree of congestion as a priority communication network (Step S203). The selection unit 143 writes the selected communication network as the priority communication network in the priority communication network information 132.

### [Effects of First Embodiment]

As described above, the CPE 10 includes the wired communication unit 11, the wireless communication unit 12, the communication control unit 141, the acquisition unit 142, and the selection unit 143. The wired communication unit 11 relays communication between the housed user device and the fixed communication network N2. The wireless communication unit 12 relays communication between the user device and the mobile communication network N3. The acquisition unit 142 acquires the degree of congestion of at least one of the fixed communication network N2 and the mobile communication network N3. The selection unit 143 selects one of the fixed communication network N2 and the mobile communication network N3 based on the degree of congestion. The communication control unit 141 causes the user device to execute communication by using the communication network selected by the selection unit 143.

This enables the CPE 10 to switch between the fixed communication network N2 and the mobile communication network N3 and perform communication in consideration of congestion. As a result, the CPE 10 can avoid congestion while maintaining quality of communication service.

The communication control unit 141 transmits the packet transmitted from the user device to the fixed communication network N2. When the transmission of the packet fails, the selection unit 143 selects the mobile communication network N3. This enables the CPE 10 to efficiently perform communication in accordance with the congestion situation.

The acquisition unit 142 acquires the degrees of congestion of both the fixed communication network N2 and the mobile communication network N3. The selection unit 143 selects a communication network having a smaller degree of congestion from the fixed communication network N2 and the mobile communication network N3. This enables the CPE 10 to smoothly perform communication since a priority communication network is preliminarily selected.

### [System Configuration and Like]

Furthermore, each component of each illustrated device is functionally conceptual, and is not necessarily required to be physically configured as illustrated in the drawings. That is, a specific form of distribution and integration of each device is not limited to the illustrated form, and all or a part thereof can be functionally or physically distributed or integrated in any unit in accordance with various loads, usage conditions, and the like. Moreover, all or any part of each processing function of each device can be implemented by a CPU or a program analyzed and executed by the CPU, or can be implemented as hardware using wired logic. Note that the program may be executed not only by the CPU but by another processor such as a GPU.

Furthermore, all or a part of the processing described as being automatically performed among pieces of processing described in the embodiment can be manually performed. Alternatively, all or a part of the processing described as being manually performed can be automatically performed by a known method. In addition, the processing procedure, the control procedure, the specific names, and the information including various pieces of data and parameters illustrated in the specification and the drawings can be changed in any way unless otherwise specified.

### [Program]

In one embodiment, the CPE 10 can be implemented by installing, in a desired computer, a communication control program for executing the above-described information processing as package software or online software. For example, an information processing device can be caused to function as the CPE 10 by causing the information processing device to execute the above-described communication control program. The information processing device mentioned here includes a desktop or notebook personal computer. In addition, examples of the information processing device include a tablet user device, a smartphone, a mobile communication user device such as a mobile phone and a personal handyphone system (PHS), and a slate user device such as a personal digital assistant (PDA).

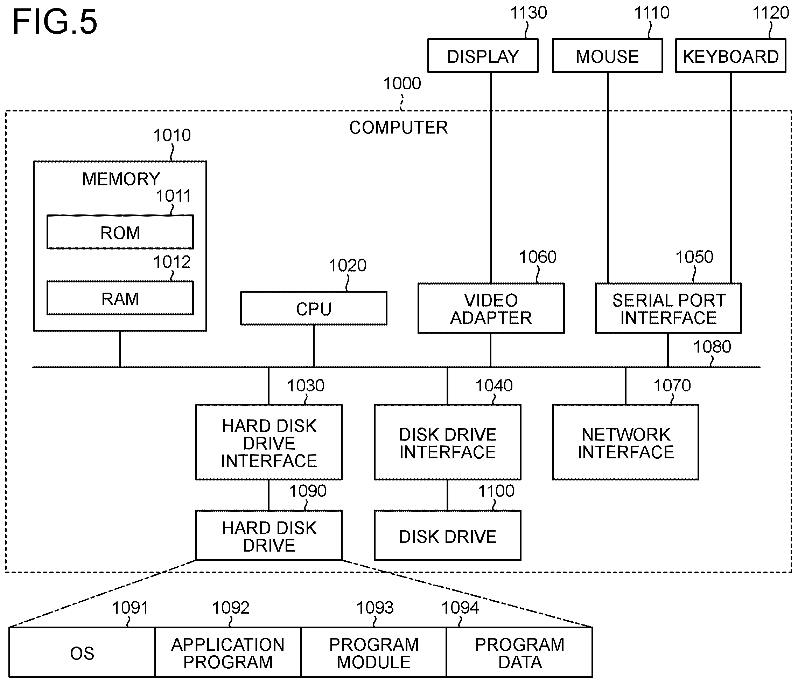

FIG. 5 illustrates a configuration example of a computer that executes the communication control program. A computer 1000 includes, for example, a memory 1010 and a CPU 1020. Furthermore, the computer 1000 includes a hard disk drive interface 1030, a disk drive interface 1040, a serial port interface 1050, a video adapter 1060, and a network interface 1070. These units are connected by a bus 1080.

The memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090. The disk drive interface 1040 is connected to a disk drive 1100. For example, a removable storage medium such as a magnetic disk and an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an operating system (OS) 1091, an application program 1092, a program module 1093, and program data 1094. That is, a program defining each piece of processing of the CPE 10 is implemented as the program module 1093 in which a computer executable code is written. The program module 1093 is stored in, for example, the hard disk drive 1090. For example, the program module 1093 for executing processing similar to the functional configuration in the CPE 10 is stored in the hard disk drive 1090. Note that the hard disk drive 1090 may be replaced with a solid state drive (SSD).

Furthermore, setting data used in the processing of the embodiment described above is stored in, for example, the memory 1010 and the hard disk drive 1090 as the program data 1094. Then, the CPU 1020 reads the program module 1093 and the program data 1094 stored in the memory 1010 and the hard disk drive 1090 to the RAM 1012 as necessary, and executes the processing of the embodiment described above.

Note that the program module 1093 and the program data 1094 are not limited to being stored in the hard disk drive 1090, and may be stored in, for example, a removable storage medium and read by the CPU 1020 via the disk drive 1100 or the like. Alternatively, the program module 1093 and the program data 1094 may be stored in another computer connected via a network (e.g., local area network (LAN) and wide area network (WAN)). Then, the program module 1093 and the program data 1094 may be read by the CPU1020 from another computer via the network interface 1070.

### [Comparison with SD-WAN]

There has been known a technique called a software defined-wide area network (SD-WAN). In the technology, software defined networking (SDN) that controls a network with software is applied to a wide area network (WAN). The SD-WAN implements flexible network configuration and traffic control in inter-base connection and cloud connection (reference: Software-Defined Network Service(https://www.ntt.com/business/services/network/vpn/s d-networks.html)).

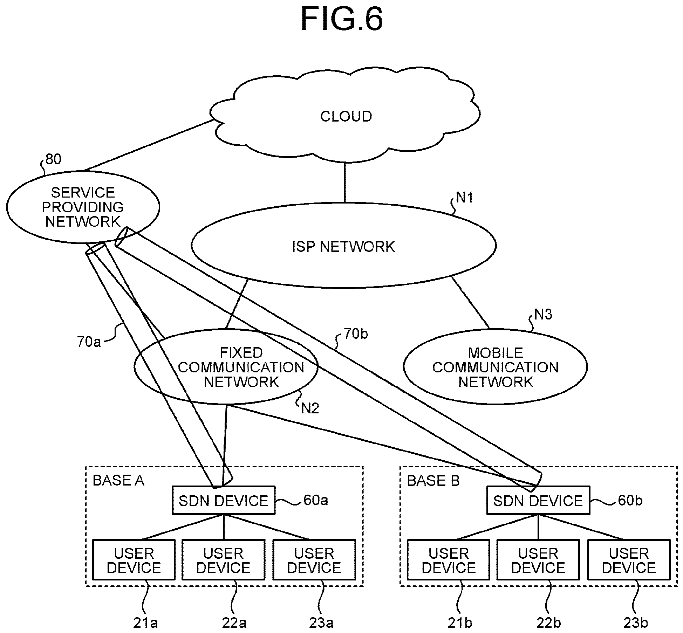

In contrast, the SD-WAN has difficulty in achieving the above-described embodiment. This will be described with reference to FIG. 6. FIG. 6 illustrates a configuration of a network of the SD-WAN.

As illustrated in FIG. 6, when the SD-WAN is implemented, an SDN device is installed in each base. An SDN device 60a is installed in the base A. Furthermore, an SDN device 60b is installed in the base B.

The SDN device 60a and the SDN device 60b are connected to a service providing network 80 via a virtual private network (VPN). The service providing network 80 is used by a service provider to provide connection service for connecting a base with a base or a base with a cloud.

A VPN tunnel 70a is a virtual line constructed on the fixed communication network N2, and connects the SDN device 60a with the service providing network 80. A VPN tunnel 70b is a virtual line constructed on the fixed communication network N2, and connects the SDN device 60b with the service providing network 80. The VPN tunnel 70a and the VPN tunnel 70b implement the VPN.

Furthermore, the SD-WAN may have a breakout function in which a user device is connected to a cloud or the like without the service providing network 80. For example, when the breakout function is used, the SDN device 60a is connected to the cloud via the fixed communication network N2 and the ISP network N1.

Here, the SDN device 60a and the SDN device 60b do not have a function of transmitting packets to both the fixed communication network N2 and the mobile communication network N3. Therefore, the SDN device 60a and the SDN device 60b cannot select one of the fixed communication network N2 and the mobile communication network N3 to cause a user device to perform communication by using the selected communication network.

For example, the SDN device 60a and the SDN device 60b relay communication between the housed user device and the fixed communication network N2, but do not relay communication between the housed user device and the mobile communication network N3.

In the first place, a service provider using the service providing network 80 merely provides connection service via the VPN. Therefore, the congestion situations of the ISP network N1, the fixed communication network N2, and the mobile communication network N3 cannot be acquired from the service providing network 80.

Furthermore, in the above-described embodiment, connection service having a function similar to that of the SD-WAN can be provided by performing software-defined (SD) processing on the ISP network N1. For example, in addition to the VPN and the breakout function, the SD-implemented ISP network N1 (hereinafter, underlay network system) can provide control of network quality using software, provision of a management portal, and a security function using deep packet inspection (DPI) and the like. The control of network quality includes switching of a connection form between a guarantee type and a best effort type, a band change, and the like.

Furthermore, the underlay network system can acquire the degrees of congestion of the ISP network N1, the fixed communication network N2, and the mobile communication network N3. The underlay network system can acquire the degrees of congestion of the networks in a method similar to the method described with reference to FIG. 4.

Furthermore, the underlay network system notifies the CPE 10 of the acquired degrees of congestion or the priority communication network. The communication control unit 141 of the CPE 10 can select a communication network based on the information from the underlay network system.

That is, the underlay network system acquires the degrees of congestion of the fixed communication network N2 and the mobile communication network N3. The selection unit 143 of the CPE 10 selects one of the fixed communication network N2 and the mobile communication network N3 based on the degrees of congestion acquired by the underlay network system.

There is no need to use the VPN between each base and the underlay network system. Therefore, the communication control unit 141 transmits a packet transmitted from the user device to the fixed communication network N2 or the mobile communication network N3 without tunneling.

The CPE 10 is not required at all to have a function related to the VPN such as tunneling. In this case, the communication control unit 141 transmits the packet transmitted from the user device to the fixed communication network N2 or the mobile communication network N3 while not (never) performing tunneling constantly.

### [Explanation of Reference]

- N1: ISP NETWORK
- N2: FIXED COMMUNICATION NETWORK
- N3: MOBILE COMMUNICATION NETWORK
- 10, 10a, 10b: CPE
- 11: WIRED COMMUNICATION UNIT
- 12: WIRELESS COMMUNICATION UNIT
- 13: STORAGE UNIT
- 14: CONTROL UNIT
- 131: CONVERSION TABLE
- 132: PRIORITY COMMUNICATION NETWORK INFORMATION
- 141: COMMUNICATION CONTROL UNIT
- 142: ACQUISITION UNIT
- 143: SELECTION UNIT

## Claims

1. A communication control device comprising:
a first communication unit that relays communication between a user device that is housed and a fixed communication network;
a second communication unit that relays communication between the user device and a mobile communication network;
an acquisition unit that acquires a degree of congestion of at least one of the fixed communication network and the mobile communication network;
a selection unit that selects one of the fixed communication network and the mobile communication network based on the degree of congestion; and
a communication control unit that causes the user device to execute communication by using a communication network selected by the selection unit.

2. The communication control device according to claim 1,
wherein the communication control unit transmits a packet transmitted from the user device to the fixed communication network, and
when transmission of the packet fails, the selection unit selects the mobile communication network.

3. The communication control device according to claim 1,
wherein the acquisition unit acquires degrees of congestion of both the fixed communication network and the mobile communication network, and
the selection unit selects a communication network having a smaller degree of congestion from the fixed communication network and the mobile communication network.

4. A communication control method to be executed by a communication control device including:
a first communication unit that relays communication between a user device that is housed and a fixed communication network; and
a second communication unit that relays communication between the user device and a mobile communication network, the communication control method comprising:
an acquisition process of acquiring a degree of congestion of at least one of the fixed communication network and the mobile communication network;
a selection process of selecting one of the fixed communication network and the mobile communication network based on the degree of congestion; and
a communication control process of causing the user device to execute communication by using a communication network selected by the selection process.

5. A communication control program causing a communication control device including:
a first communication unit that relays communication between a user device that is housed and a fixed communication network; and
a second communication unit that relays communication between the user device and a mobile communication network, to execute:
an acquisition step of acquiring a degree of congestion of at least one of the fixed communication network and the mobile communication network;
a selection step of selecting one of the fixed communication network and the mobile communication network based on the degree of congestion; and
a communication control step of causing the user device to execute communication by using a communication network selected by the selection step.

6. A communication control system comprising: a communication control device that houses a user device; and a network system that provides connection service to the user device,
wherein the network system acquires degrees of congestion of a fixed communication network and a mobile communication network, and
the communication control device includes:
a first communication unit that relays communication between the user device and the fixed communication network;
a second communication unit that relays communication between the user device and the mobile communication network;
a selection unit that selects one of the fixed communication network and the mobile communication network based on the degrees of congestion acquired by the network system; and
a communication control unit that causes the user device to execute communication by using a communication network selected by the selection unit.

7. The communication control system according to claim 6,
wherein the communication control unit transmits a packet transmitted from the user device to the fixed communication network or the mobile communication network without tunneling.
